# EUROPEAN PATENT APPLICATION

(11) **EP 1 967 644 A1**
(43) Date of publication of application: **10.09.2008**
(21) Application number: 07004710.5
(22) Date of filing: 07.03.2007
(51) Int. Cl.: D06M 14/22, B01J 20/32, B01J 20/28, B01J 20/285, B01J 20/286

(54) **Composite microfibre**

(71) Applicant: Jacobs University Bremen gGmbH, 28759 Bremen (DE)
(72) Inventor: Fernandez-Lahore, Marcello, Prof.Dr., 28579 Bremen (DE); Grasselli, Mariano, Prof.Dr., 1429 Buenos Aires (AR)

(57) **Abstract**

The present invention relates to composite microfibrous materials, particularly for chromatography, and their production and uses. Said Composite microfibre, comprises a polysaccharide polymer selected from the group consisting of cellulose, hydroxyethyl cellulose, hydroxypropyl cellulose, methyl cellulose, ethyl cellulose, n-propyl cellulose, isopropyl cellulose, cellulose acetate and combinations of two or more of these substances, and one or more substituents.

## Description

The present invention relates to composite microfibrous materials, particularly for chromatography, and their production and uses.

Chromatographic methods include several separations modes like size exclusion chromatography, ion exchange chromatography, hydrophobic interaction chromatography, reverse phase chromatography, affinity chromatography, immunoadsorption chromatography, and other well-known chromatographic techniques. Presently, chromatographic-adsorptive separations utilising beaded supports, monoliths or membrane media are used for purification and recovery of protein and biological macromolecules. By use of beads, monoliths and membranes, separations are accomplished through similar physicochemical interactions but in hydrodynamically different ways. A major difference between these three chromatographic media is the relationship between the adsorbing surface and the fluid flow through them.

Bead-based media have convective flow occurring at the bead surface while most of the adsorbing surface is internal to the bead and can only be reached via diffusion -a slow process, especially in the case of macromolecules such as proteins. The convective fluid flow properties are determined by the bead size.

Since most of the binding sites on the beaded support are accessed through diffusion of the targeted molecule, the dynamic binding capacity i.e. the capacity in a flow-through mode at a given flow rate, is coupled to the bead size and therefore to the convective flow properties of the adsorbent. Smaller beads, however, require a higher pressure to attain an equivalent flow rate than larger beads when packed into a column. It is current practice to pack such beads into a chromatography column forming a bed of media through which a fluid containing the material to be captured is passed. After washing to remove unbound contaminants, the captured material is eluted from the beads and collected.

Several drawbacks exist with bead-type media: The packing of the beads into a column is a difficult and laborious task. One needs to be sure that the column is properly packed so as to avoid channelling, bypass and blockages within the column. Further, the use of beads limits the depth of the media in process applications because of the pressure that must be overcome. Excess pressure may compress the beads. Softer beads tend to compress more than rigid beads. Compression is indicated by a steep increase in pressure drop across the bed at sufficiently high flow rates. High pressure drop is cause by compression of the beads and subsequent reduction of void volume at the column exit. Pressure drop is especially important in soft gel bead systems, where slow flow rates are mandatory to ensure acceptable performance.

As chromatography beads are porous and the selected entities to be captured must diffuse into the pores of the media to get captured, the speed and capacity of the whole system is diffusionally limited. There are two main diffusional barriers: one surrounding the bead where a film of liquid may form and reduce the movement of the selected molecule from the liquid bulk to the bead surface, and a second internal or particle-side diffusional resistance which is determined by the size, number and length of the pores formed within the bead support. As a result, traditional chromatography has worked based on a compromise between resolution and capacity. This compromise is required mainly by differences between the velocity of diffusional mass transport inside the particles and convective flow on the surface. Additionally, the permeability of the media is related to bead size as well as the media stability. Larger beads and beads with larger pores tend to have higher permeability. Beads that are not subject to or less subject to compression also tend to have greater permeability. However, at high flow rates, permeability does decrease and dynamic capacity also decreases. Dynamic capacity refers to the fraction of the total equilibrium capacity which is actually utilised under process conditions i.e. when residence time is limited.

Moreover, and since the mentioned soft beaded adsorbents are utilised in packed-beds, intensive clarification of the feedstock should be performed to avoid column blocking and backpressure development. Crude fermentation broths contains biological particles like cells or cell debris which can form very compressible filtration cakes and which can be adherent towards process surfaces. Therefore, extensive solids removal e.g. by filtration or centrifugation is typically performed in advance to any chromatographic step.

An important challenge has been finding the best way to expose quickly and efficiently the mobile-phase and the sample molecules to the entire surface area of the chromatographic material, including the area inside the pores. For this alternative membrane or monolithic adsorbers have been proposed. These systems offer much less resistance to mass transfer and therefore they allow breaking the relationship between flow rate and resolution, working at high flow rates and high resolution. They are typically 10 to 100 times faster than conventional chromatography .

Membrane adsorption utilises microfiltration membranes where the surface has been functionalised to obtain a selective binding. Because the binding capacity is only a surface phenomenon in this design, as the pore size increases the binding capacity decreases. Equilibrium or static capacity refers here to the quantity of the target molecule that is bound or adsorbed per mass of adsorbent at longer contact times when the thermodynamic equilibrium is reached. However, one advantage of this surface-dominated binding is that there is no mass transfer resistance provided by the structure of the media to absorption. Additionally, membrane adsorption can alleviate from high system operating pressures. Membrane adsorbents are now available commercially but they have found limited application due to the fact that surface area dictates the binding capacity and to the fact that there are limits to the binding capacity one can achieve for a given permeability due to the coupled flow and binding properties. Other drawbacks for membrane-based systems are the poor release of the captured species and the fouling effect by biomass components during real operating conditions.

Direct contact methods, as explained below, which are only partially compatible with the presence of biological particles in the feedstock are being now proposed for sequestration of the targeted species from the whole, or partially clarified or diluted, fermentation broth. These include a) finite bath contactors , b) fluidised and classified bed systems , and c) mixed-matrix modules. The central property of these systems from the point of view of bioproduct processing is the increased interparticle distance within the bed. This allows the introduction of particle-containing feedstock without the risk of bed blocking. However, direct contact methods are prone to the deleterious effects caused by biomass interactions with the beaded materials. Impaired system hydrodynamics and concomitant loss in adsorption performance has been reported. Moreover, mass transfer limitations remain the same as those described for packed-bed systems.

What is desired is an adsorptive or chromatographic media having increased system productivity, which binds reversibly the targeted species, and which is tolerant to biomass in order to allow direct processing of a crude feedstock.

Without relation to chromatography applications, a number of methods for modifying materials have been developed. Some of these methods are discussed hereinafter to elucidate the technical background of the invention and to provide hints enabling the skilled person to work the present invention, but without any explicit or implicit admission that any of these methods were or are relevant for assessing novelty and inventive step of the present invention.

Regarding to the base material or support, several methods for modifying textile fibres like cotton and other cellulosic materials -or various other natural, man made, regenerated and synthetic fibres materials- have been developed since 1960. Most of them were studied by the textile industry to alter cloth or fabric properties in order to improve various performance properties such as water resistance, soil resistance, speed of drying, permanent press, abrasion resistance properties.

Methods for modifying materials with reactive groups such as hydroxyls and amines have been developed in the art, however, materials with hydroxyl groups, including polysaccharides such as cellulose, have been found to be difficult to modify via covalent chemical bonds and therefore require reactive modifiers or extreme conditions. Methods of reacting with hydroxyls that have been developed in the chemistry field include the use of acid chlorides, anhydrides, succinimides, and carbonyldiimidazole. See, e.g., J. March, "Advanced Organic Chemistry-Reactions, Mechanisms and Structure,", 3rd Ed., John Wiley and Sons, New York, 1995; and G. Hermanson, "Bioconjugate Techniques," Academic Press, Inc., San Diego, 1996.

Most chemical research in the textile field was conducted in the 1950s, 60s, and 70s. This piece of work has been extensively reviewed. For example, see: Smith and Block, Textiles in Perspective, Prentice-Hall, Englewood Cliffs, N.J., 1982; Handbook of Fiber Science and Technology, Marcel Dekker, New York, N.Y., Vols. I-III, 1984; S. Adanur, Wellington Sears Handbook of Industrial Textiles, Technomic Publishing Company, Inc., Lancaster, Pa., 1995; and Philip E. Slade, Handbook of Fiber Finish Technology, Marcel Dekker, New York, 1998). A large majority of this published research was never commercialized due to inhibitory costs or the impracticality of integration into textile production processes.

Radiation-induced polymerisation to graft synthetic monomers was also early studied by Garnett and others (Grafting, J.L Garnett, Radiat. Phys. Chem 14 (1979) 79-99). UV and gamma ray are able to initiate polymerisation of acrylates and related vinyl monomers with high yield. Gamma rays are a highly penetrating radiation source yielding an homogeneous modification grafting. Three different techniques are available using ionizing radiation: pre-irradiation; simultaneous and peroxidation.

In recent years has been less research in cotton and cellulosic materials. Several methods graft polymerization using chemical initiation, ultraviolet light (UV), cold plasma, electron-beam and gamma rays have been described in the last years. All of them made use of the pre-irradiation and peroxidation techniques. In general, chemical methods utilise cerium salts which have low polymerisation efficiency. UV and cold plasma methods yield mainly surface-modified materials due to their low penetration efficiency. Electron-beam is a highly energetic source delivering energy in a very short time and thus, increasing the unwanted degradation process of trunk polymers.

Princia et al. described the UV-initiated grafting polymerisation of methacrylates onto cotton in order to reinforce these materials. The mechanical strength and/or wetting behaviour of cellulose based textiles have been improved. (Synthesis and mechanical characterisation of cellulose based textiles grafted with acrylic monomers E. Princia, S. Vicinia, E. Pedemontea, G. Gentile, Mariacristina Cocca and Ezio Martuscelli. European Polymer Journal 42 (2006) 51-60).

Glycidyl methacrylate (GMA) was graft-polymerized to plasma treated fibers and β-cyclodextrin was chemically bound to the grafted surface. The β-cyclodextrin immobilized fibers adsorbed phenols effectively from an aqueous solution (Plasma graft polymerization of glycidyl methacrylate and cyclodextrin immobilization, Toshihiro Hirotsu, Thin Solid Films 506-507 (2006), pp 173-175).

Albertia et al described the use of electron beam as activation method. Powdered samples of cotton, flax and viscose from textile fibres were subjected to electron beam irradiation (20-400 KGy). Further treatment with glycidyl methacrylate solution (GMA) grafts the samples. (Electron beam irradiated textile cellulose fibres. ESR studies and derivatisation with glycidyl methacrylate (GMA) A.

Albertia, S. Bertinib, G. Gastaldic, N. lannacconed, D. Macciantellia, G. Torrib and E. Vismara, European Polymer Journal 41 (2005)1787-1797)

Recently, Reddy et al. described the preparation of a flame retardant cotton fabric. The authors grafted GMA on ordinary or untreated cotton fabric by γ-rays from 60Co source. Epoxy groups present in GMA grafted cotton fabric was reacted with ethylene diamine and subsequently modified with phosphate. (lonizing radiation graft polymerized and, P. R. S. Reddy, G. Agathian and Ashok Kumar, Radiation Physics and Chemistry ,72 (2005) 511-516)

Takács et al recently described a preirradiation method to graft acrylamide (AAm), acylic acid (Aac), 2-hydroxypropil acrylate (HPA), 2-hydroxypropil methacrylate (HPMA) and N,N'-methylene bisacrylamide (BAAm) to cotton-cellulose by γ-rays from 60Co source. Grafting improved the swelling of the samples showing saturation at about 270% at natural pH (with Aac and BAAm). For AAm, HPA and HPMA at low grafting yield an increase in swelling was found and then the swelling decreased with increasing grafting yield.

However, degree-of-polymerisation values (DP) for cellulose drop sharply from 1700 to 500 after 10 kGy irradiation. Additionally, scanning electronic microscope pictures show that the main modification occured on the surface of the fibre. (Modification of cotton-cellulose by preirradiation grafting, E. Takács, L. Wojnárovits, J. Borsa, J. Pappa, P. Hargittai and L. Korecz, Nuclear Instruments and Methods in Physics Research Section B: Beam Interactions with Materials and Atoms 236 ( 2005) 259-265)

What is desired is method for obtaining a material which is able to modify the surface and the bulk of chromatography material in order to give a hydrogel-like structure where reactive groups are introducible to perform ligand immobilization by simple chemical reactions. At the same time the physicochemical characteristics of the chromatography material should kept unaffected. Particularly, the chromatography material should exhibit resistance to pH within the range 2.0 - 11.0, resistance to temperature up to 121 °C, and low operational back-pressures i.e. typically lower than 10 Bar.

According to the invention, a composite microfibre is provided comprising a polysaccharide polymer and one or more substituents of formula (1) 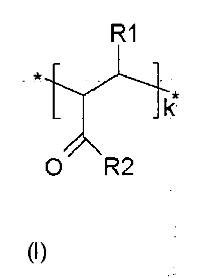 wherein k is 1 or greater,
and wherein each moiety R1 is independently selected from H and methyl,
and wherein each moiety R2 is independently selected from -H, -OH, -NH2, -SH, -OR3, -NHR3 and -NR3R4, -SR3,
and wherein each moiety R3 and R4 are chemical groups independently selected from C1-C4 alkyl, C1-C4 alkoxy, C1-C4 alkoxy halide and C1-C4 heteroalkyl substituents, and is prefererably selected from -CH3 , -CH2-CH3, -CH2-OH, -CH2-CH2-OH, -CH2-CH2-NH2, -CH-CH(OH)-CH2-OH, -CH-CH(OH)-CH3, glycidyl, anhydride, sulfonic acid.

The microfibre of the present invention surprisingly exhibits a high swelling ratio, improving the mechanical stability of a chromatography medium. In addition, the microfibre of the present invention is also chemically very stable, and advantageously allows to continually use a chromatography medium comprising or consisting of the microfibre of the present invention for a long time. The material typically resists between 50 and 200 or more complete chromatographic cycles - including equilibration, loading, washing, desorption, and regeneration - with a loss of total dynamic binding capacity lower than 20%. The microfibre of the present invention, when used in or as a chromatography medium, allows diffusion of target molecules into its composite core hydrophilic phase. The hydrophilic core of the microfibre increases the dynamic binding capacity independent of the convective flow properties due to the larger number of binding sites. The novel composite microfibres also circumvent problems associated with beaded media. Typically, a bead media's mechanical strength is coupled to the adsorbing material being used. Having the mechanical and binding properties coupled is a limitation associated with many beaded media. The present invention allows to produce microfibres in hydrogel microfibrous shape with adsorptive properties, obviating the aforementioned drawbacks of beaded media.

The presence of reactive groups onto the composite material allows for the addition of various ligand types which are useful or specific adsorptive process. An appropriate mechanical arrangement of the composite fibers can result in good convective and diffusional mass-flows.

The substituent of formula (I) is thus preferably selected from the group consisting of (poly)acrylamides, (poly)methacrylamides, (poly)acrylates, (poly)methacrylates, and polymers producible with one or more monomers selected from the group consisting of 2-hydroxyethyl (meth)acrylate, hydroxyethoxyethyl (meth)acrylate, hydroxydiethoxyethyl (meth)acrylate, methoxyethyl (meth)acrylate, methoxyethoxyethyl (meth)acrylate, methoxydiethoxyethyl (meth)acrylate, polyethyleneglycol(meth)acrylate, methoxypolyethylene glycol(meth)acrylate, (meth)acrylic acid, sodium (meth)acrylate, glycerol (meth)acrylate, hydroxypropyl (meth)acrylate, and hydroxybutyl (meth)acrylates, 2-acrylamido-2-methyl-1-propanesulfonic acid, 2-(acryloyloxy)ethyltrimethyl-ammonium methyl sulfate, (2-trifluoromethyl)acrylic acid, 3-sulfopropyl acrylate potassium salt, glycidyl (meth)acrylate, morpholine (meth)acrylate (meth)acrylonitrile, anhydride (meth)acrylic, 2-(methacryloyxy)ethyl phosphate, N,N'-diethylaminoethyl (meth)acrylate, (3-(methacryloylamino)propyl) trimethylammonium chloride, (3-acrylamidopropyl) trimethylammonium chloride and acrylamide monomers such as acrylamide and substituted acrylamines, such as dimethyl (meth)acrylamide, diethyl (meth)acrylamide, diacetone (meth)acrylamide, aminopropyl (meth)acrylamide, isopropyl (meth)acrylamide, or copolymers of these substituents. With these substituents, the microfibre of the present invention can be used in or as a particularly mechanically and chemically stable chromatography medium.

The substituent of formula (I), and preferably one of the aforementioned preferred substituents, is preferably crosslinked with a crosslinker selected from the group consisting of functional monomers are polymerised in the presence of crosslinkers like divinylbenzene, ethyleneglycol di(meth)acrylate, 1,4-butanediol di(meth)acrylate, triethyleneglycol di(meth)acrylate, diethyleneglycol di(meth)acrylate, triethyleneglycol di(meth)acrylate and poly(ethylene glycol) di(meth)acrylate, oligo(polyhydroxylalkyl)silyl (meth)acrylate, and ethylene-bis-(meth)acrylamide, methylene-bis-(meth)acrylamide, and piperazine di(meth)acrylamide. These crosslinkers further improve the mechanical stability of the microfibre of the present invention, and thus aid in providing a particularly mechanically stable chromatography medium.

A particularly preferred substituent of formula (I) comprises a glycidyl, oxime, halogen or anhydride functionality, and is further preferably selected from the group consisting of poly(glycidyl methacrylate), poly(acrylamidoxime), poly(acrylic anhydride) and poly(2-bromoethyl methacrylate) and copolymers thereof.

The composite microfibre of the present invention is or can preferably be made by radiation-induced grafting of a substituent of formula (I), particularly one of the aforementioned preferred or particularly preferred substituents, onto a polysaccharide polymer selected from the group consisting of cellulose, hydroxyethyl cellulose, hydroxypropyl cellulose, methyl cellulose, ethyl cellulose, n-propyl cellulose, isopropyl cellulose and cellulose acetate. Radiation-induced grafting polymerization is the selected can be accomplished under various different experimental conditions known in the art. Most preferred are pre-irradiation grafting polymerization methods (pre-irradiation or peroxy initiated). However, in the order to reduce the trunk polymer degradation, especially in a highly hydroxylated polymers, simultaneous grafting technique can also be preferred, as this method is less aggressive compared to pre-irradiation grafting polymerization. In addition, by simultaneous grafting, homogeneous grafting is achieved by polymerization on the surface and bulk simultaneously.

The radiation-induced grafting thus preferably is a simultaneous gamma-ray induced grafting technique.

Further, it is preferred that the composite microfibre of the present invention has a total mass of substituents of formula (I) in the fibre from 5 to 200 wt.% of the polysaccharide weight. Such microfibres have a particularly high swelling index and a good mechanical stability.

The composite microfibre of the present invention preferably has a thickness of 5 to 80 µm. This thickness surprisingly provided microfibres which, when being used in or as chromatography media, result in a good dynamic binding capacity with good of the convective flow properties.

Likewise, it is also preferred that the composite microfibre of the present invention, and particularly the microfibre with a thickness of 5 to 80 µm, has a length of 0.5 to 10 cm. These dimensions further aid in providing a good dynamic binding capacity with good of the convective flow properties.

The composite microfibre of the present invention preferably further comprises one or more modifiers selected from the group consisting of antibodies or F(ab')2, Fab, Fv or scFv antibody fragments, (recombinant) protein A, (recombinant) protein G, dyes, chelating groups and imidoacetic acid complexes with Cu2+, Ni2+, Zn2+ or Co2+, immobilized on a substituent of formula (I). These modifiers aid particularly well in providing means for adsorbing a target on a chromatographic medium.

According to the invention, there is further provided a chromatographic material, said material comprising, consisting essentially of or consisting of composite microfibres of the invention.

The chromatographic material of the invention is characterized by a swelling ratio of 10 to 400 % and preferentially of 50 to 200% in distilled water at 20°C. With this swelling ratio, particularly good flow properties can be ascertained.

Another advantage of the chromatography media of the present invention is the simplicity of handling. In general, beads must be packed into a column. The quality of this packing determines the performance of the adsorbing bed. This adds another source of variability to the chromatographic process which must be validated before use. The media according to the invention, however, could operate in several device forms, all which can be properly filled and validated prior to use, eliminating a source of variability during the chromatographic process. In or as chromatography media, the composite microfibres of the present invention are preferably arranged in the form of stacked disks, rolls or in parallel or twirled arrangement. With these arrangements, good flow properties can be-achieved.

Composite microfibres of the invention can be easily arranged in a parallel configuration that can alleviate -in combination with an appropriate surface shielding strategy - deleterious biomass effects on system hydrodynamics and sorption performance. A particularly preferred surface shielding agent is polyethylene glycol. The chromatography media of the present invention allow to achieve higher productivity being amenable of sequestrating the product directly from the fermentation feedstock as it is known from the application of direct sequestration methods and disposable cartridges.

A composite microfibre of the present invention can be produced according to the invention by a method comprising the steps of
i) providing a a polysaccharide polymer selected from the group consisting of cellulose, hydroxyethyl cellulose, hydroxypropyl cellulose, methyl cellulose, ethyl cellulose, n-propyl cellulose, isopropyl cellulose and cellulose acetate, and
ii) radiation grafting of one or more substituents of formula (I) thereon.

Preferably, the polysaccharide polymer is pre-treated by alkali hydophilisation, even more preferably by pre-treating with sodium hydroxide, ammonium hydroxide or potassium hydroxide.

The invention is hereinafter further described by reference to preferred embodyments and figures, without limiting the scope of the claims.

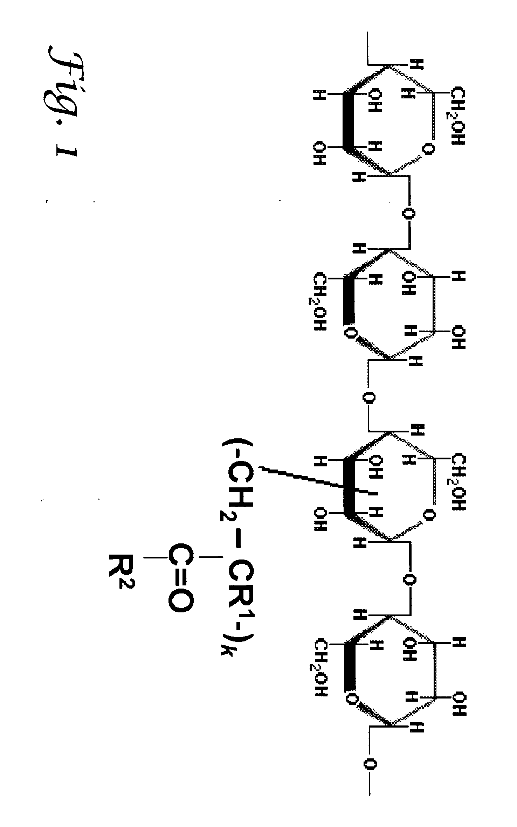

Fig 1. Shows the chemical structure of the composite microfibrous material. Radiation grafting is utilised for the modification of a polysaccharide polymer i.e. cellulose or cellulose derivatives.

### Production

Natural microfibrous cellulosic material was treated with a solution of sodium hydroxide 4 N to 6 N during 2 h to 8 h at 25 C or 60 C to improve its swelling properties. A carefully washing with tap water is performed to neutrality.

Dry hydrophilic microfibrous material was swelled in a methacrylic/acrylic monomer solution or a mixture of them and exposed to radiation in a cobalt-60 source (dose between 1 and 15 kGy). Degasing the monomer solution burbling nitrogen improve the grafting yield. Grafting radio-induced polymerimerization is performed under this experimental setup.

The resulting microfibrous material was thoroughly washed with a suitable solvent or a sequence of solvents and stored in a 0.1 wt-% aqueous solution of sodium azide to prevent bacterial growth. In order to determine the amount of grafted polymer added to the support, the sample was dried under vacuum at room temperature to a constant mass. The mass gain due to gel incorporation was calculated as a ratio of an add-on mass of the dry gel to the initial mass of the support.

### Ligand immobilization

As stated above, the microfibrous material can also be selected to comprise reactive functional groups that can be used to attach ligands or other specific binding sites. These functional microfibrous material can be add-on with epoxy, anhydride, reactive halogen, or acid chloride groups that can be used to attach the ligands or other specific binding sites. Examples include poly(glycidyl methacrylate), poly(acrylamidoxime), poly(acrylic anhydride), poly(2-bromoethyl methacrylate) or others. Introduced func-tional property can take the form of antibodies or fragments of antibodies, or alterna-tively, chemical mimics such as dyes, chelating groups, or many others. Affinity ligands that can be attached to microfibrous material via reactive groups include antigen and antibody ligands such as monoclonal antibodies, protein A, recombinant protein A, protein G, or recombinant protein G to separate immunoglobulins from different media, dye ligands such as Cibacron blue or Reactive red to separate albumins and various enzymes, metal affinity ligands such as complexes of iminodiacetic acid (IDA) ligand with Cu2+, Ni2+, Zn2+, or Co2+ to separate various histidine containing proteins.

### Protein adsorption/desorption experiments

Protein adsorption experiments were carried out with two proteins, namely, bovine serum albumin (BSA) and lysozyme (HEWL). Total human immunoglobulin G was also employed to evaluate dynamic sorption performance.
1) In the case of experiments with a positively charged microfibrous material, a cartridge containing 0.5 gram of material was first washed with distilled water and subsequently with a phosphate buffer solution (pH=7.4). In an adsorption step, a BSA solution, comprising from 0.4 to 0.5 mg BSA per ml of buffer solution, was poured to the cell to give a 5 cm head over the cartridge. This hydrostatic pressure of 5 cm was kept constant by further additions of the BSA solution. In a modification of this method, the cell was pressurised with compressed nitrogen. The flow rate was measured by weighing the amount of permeate as a function of time. Typical values varied between 1 and 5 ml/min.
   Permeate samples were collected at 2-5 min intervals and analyzed by UV analysis at 280 nm. Following the adsorption step, the microfibrous cartridge in the cell was washed with about 200 ml of the phosphate buffer solution, and desorption was carried out with a phosphate buffer solution containing 1M NaCl at 5 cm head pressure or under a controlled pressure of compressed nitrogen. The permeate samples were collected at 2-5 min intervals and tested by UV analysis at 280 nm for BSA content.
2) For negatively charged microfibres, a solution of lysozyme in a phosphate buffer solution having a pH of 7.8 and a lysozyme concentration of 0.5 g/L was used in a procedure similar to that described above for BSA and positively charged materials. The flow rate during the protein adsorption was again kept within 1-5 ml/min. Prior to desorption of the protein, the cartridge was washed by passing with 200 ml of the buffer solution. Desorption of the protein was carried out using a phosphate buffer solution (pH = 7.8) containing 1M NaCI in the same way as described above for BSA desorption. The lysozyme content in the collected samples was determined by UV spectrophotometry at 280 nm.
3) Protein adsorption tests involve a cartridge with one gram of negatively charged microfibres, which were disposed in a spiral configuration and the lysozyme solution (1 mg/ml) was delivered to the cartridge at controlled flow rate using a syringe-type pump. The eluted fractions were collected and analyzed in the same way as described above. The desorption of the proteins was carried in a similar way as described above, with buffered 1M NaCl delivered to the cartridge by using the pump instead of gravity or compressed nitrogen pressure. Flow rates were between 60 and 600 cm/h and dynamic protein binding capacity between 35 and 44 mg of lysozyme per gram of material in phosphate buffer solution (pH 7.8).
4) Protein adsorption tests involve a cartridge with one gram of negatively charged microfibres, which were disposed as stacked discs and the IgG solution (1 mg/ml) was delivered to the cartridge at controlled flow rate using a syringe-type pump. The eluted fractions were collected and analyzed in the same way as described above. The desorption of the proteins was carried in a similar way as described above, with buffered 1M NaCI delivered to the cartridge by using the pump instead of gravity or compressed nitrogen pressure. Flow rates were between 40 and 350 cm/h and dynamic protein binding capacity between 160 and 205 mg of IgG per gram of material, in acetate buffer solution (pH 5.5). Protein desorption was grater than 80% of the adsorbed IgG.

### Protein separation experiment

Protein separation experiments were performed with IDA-Cu2+ microfibrous discs stacked onto a XK-16 column and run in an AKTA Explorer chromatographic system (GE Healthcare). A commercial preparation of pectic enzymes was loaded onto the system in a mobile phase consisting in a phosphate-acetate buffer (pH 7.1) containing 0.25 M sodium chloride. Pectin lyase (EC 4.2.2.10) was recovered in the flow-through fraction while polygalacturonase (EC 3.2.1.15) was preferentially eluted with sodium acetate buffer (pH 3) and pectinesterase (EC 3.1.1.11) with EDTA 0.1 M. Flow rate was 350 cm/h and operating pressure below 0.25 Bar.

## Claims

1. Composite microfibre, comprising a polysaccharide polymer selected from the group consisting of cellulose, hydroxyethyl cellulose, hydroxypropyl cellulose, methyl cellulose, ethyl cellulose, n-propyl cellulose, isopropyl cellulose, cellulose acetate and combinations of two or more of these substances, and one or more substituents of formula (I) 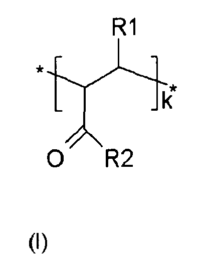 wherein k is 1 or greater,
and wherein each moiety R¹ is independently selected from H and methyl,
and wherein each moiety R2 is independently selected from -H, -OH, -NH2, -SH, -OR3 , -NHR3 and -NR3R4, -SR3,
and wherein each moiety R3 and R4 are chemical groups independently selected from C1-C4 alkyl, C1-C4 alkoxy, C1-C4 alkoxy halide and C1-C4 heteroalkyl substituents, and is prefererably selected from -CH3 , -CH2-CH3, -CH2-OH, -CH2-CH2-OH, -CH2-CH2-NH2 , -CH-CH(OH)-CH2-OH, -CH-CH(OH)-CH3, glycidyl, anhydride, sulfonic acid.

2. Composite microfibre of claim 1, wherein each substituent of formula (I) is selected from the group consisting of (poly)acrylamides, (poly)methacrylamides, (poly)acrylates, (poly)methacrylates, and polymers producible with one or more monomers selected from the group consisting of 2-hydroxyethyl (meth)acrylate, hydroxyethoxyethyl (meth)acrylate, hydroxydiethoxyethyl (meth)acrylate, methoxyethyl (meth)acrylate, methoxyethoxyethyl (meth)acrylate, methoxydiethoxyethyl (meth)acrylate, polyethyleneglycol(meth)acrylate, methoxypolyethylene glycol(meth)acrylate, (meth)acrylic acid, sodium (meth)acrylate, glycerol (meth)acrylate, hydroxypropyl (meth)acrylate, and hydroxybutyl (meth)acrylates, 2-acrylamido-2-methyl-1-propanesulfonic acid, 2-(acryloyloxy)ethyltrimethyl-armmonium methyl culfate, (2-trifluoromethyl)acrylic acid, 3-sulfopropyl acrylate potassium salt, glycidyl (meth)acrylate, morpholine (meth)acrylate (meth)acrylonitrile, anhydride (meth)acrylic, 2-(methacryloyxy)ethyl phosphate, N,N'-diethylaminoethyl (meth)acrylate, (3-(methacryloylamino)propyl) trimethylammonium chloride, (3-acrylamidopropyl) trimethylammonium chloride and acrylamide monomers such as acrylamide and substituted acrylamines, such as dimethyl (meth)acrylamide, diethyl (meth)acrylamide, diacetone (meth)acrylamide, aminopropyl (meth)acrylamide, isopropyl (meth)acrylamide, or copolymers of these substituents.

3. Composite microfibre of any of claims 1 to 2, wherein the substituent of formula (I) is crosslinked with a crosslinker monomer selected from the group consisting of divinylbenzene, ethyleneglycol di(meth)acrylate, 1,4-butanediol di(meth)acrylate, triethyleneglycol di(meth)acrylate, diethyleneglycol di(meth)acrylate, triethyleneglycol di(meth)acrylate and poly(ethylene glycol) di(meth)acrylate, oligo(polyhydroxylalkyl)silyl (meth)acrylate, and ethylene-bis-(meth)acrylamide, methylene-bis-(meth)acrylamide, and piperazine di(meth)acrylamide.

4. Composite microfibre of any of claims 1 to 3, wherein a substituent of formula (I) comprises a glycidyl, oxime, halogen or anhydride functionality.

5. Composite microfibre of any of claims 1 to 4, wherein each substituent of formula (I) is selected from the group consisting of poly(glycidyl methacrylate), poly(acrylamidoxime), poly(acrylic anhydride) and poly(2-bromoethyl methacrylate).

6. Composite microfibre, produceable or produced by radiation-induced grafting of a substituent of formula (I) onto a polysaccharide polymer selected from the group consisting of cellulose, hydroxyethyl cellulose, hydroxypropyl cellulose, methyl cellulose, ethyl cellulose, n-propyl cellulose, isopropyl cellulose and cellulose acetate.

7. Composite microfibre of claim 6, wherein the radiation-induced grafting is a simultaneous gamma-ray induced grafting.

8. Composite microfibre of any of claims 1 to 7, wherein the total mass of substituents of formula (I) in the fibre is 5 to 200 wt.% of the polysaccharide weight.

9. Composite microfibre of any of claims 1 to 8, wherein the microfibre has a thickness of 5 to 80 µm.

10. Composite microfibre of any of claims 1 to 9, wherein the microfibre has a length of 0.5 to 10 cm.

11. Composite microfibre of any of claims 1 to 9, further comprising one or more modifiers selected from the group consisting of antibodies or F(ab')2, Fab, Fv or scFv antibody fragments, (recombinant) protein A, (recombinant) protein G, dyes, chelating groups and imidoacetic acid complexes with Cu2+, Ni2+, Zn2+ or Co2+.

12. Chromatographic material, comprising, consisting essentially of or consisting of composite microfibres of any of claims 1 to 11.

13. Chromatographic material of claim 12, further **characterized by** a swelling ratio of 10 to 400 % and preferentially of 50 to 200% in distilled water at 20°C.

14. Chromatographic material of claim 12 or 13, wherein the composite microfibres are arranged in the form of stacked disks, rolls or in parallel or twirled arrangement.

15. Chromatography device, comprising a chromatographic adsorption section, said section comprising the chromatographic material of any of claims 12 to 14.

16. Use of a composite microfibre of any of claims 1 to 11 as adsorptive material in chromatography.

17. Method of producing a composite microfibre of any of claims 1 to 11, comprising the steps of
i) providing a a polysaccharide polymer selected from the group consisting of cellulose, hydroxyethyl cellulose, hydroxypropyl cellulose, methyl cellulose, ethyl cellulose, n-propyl cellulose, isopropyl cellulose and cellulose acetate, and
ii) radiation grafting of one or more substituents of formula (I) thereon.

18. Method of claim 17, wherein the polysaccharide polymer is pre-treated by alkali hydophilisation, preferably by pre-treating with sodium hydroxide, ammonium hydroxide or potassium hydroxide.
